# EUROPEAN PATENT APPLICATION

(11) **EP 4 742 365 A1**
(43) Date of publication of application: **13.05.2026**
(21) Application number: 23944695.8
(22) Date of filing: 12.07.2023
(51) Int. Cl.: H01M 10/613, H01M 10/627, H01M 10/654, H01M 10/6551, H01M 50/507

(54) **ENERGY STORAGE MODULE AND ELECTRIC APPARATUS**

(71) Applicant: Shenzhen Hithium Energy Storage Technology Co., Ltd., Shenzhen, Guangdong 518110 (CN); Xiamen Hithium Energy Storage Technology Co., Ltd., Xiamen, Fujian 361100 (CN)
(72) Inventor: LI, Maosong, Xiamen, Fujian 361100 (CN); TAN, Jiben, Xiamen, Fujian 361100 (CN)
(74) Representative: Santarelli
(86) International application number: PCT/CN2023/107075
(87) International publication number: WO 2025/010675

(57) **Abstract**

An energy-storage module (5) and an electricity-consumption device (1) are discloses in the disclosure. The energy-storage module (5) includes multiple energy-storage apparatuses (100) and a bus bar sheet (500). Each of the multiple energy-storage apparatuses (100) includes an end cover component (10) and a terminal post (20). The bus bar sheet (500) includes multiple bus bar members (60). The multiple bus bar members (60) are stacked in a thickness direction (Z). Each of the multiple bus bar members (60) includes a first connecting portion (610), a heat dissipation portion (620) and a second connecting portion (630) that are sequentially connected in a length direction (X). The first connecting portion (610) and the second connecting portion (630) are respectively connected to terminal posts (20) of two adjacent energy-storage apparatuses (100). Any adjacent two heat dissipation portions (620) of the multiple bus bar members (60) cooperatively define multiple heat dissipation through-holes (6201), thereby improving heat dissipation performance and mechanical buffering performance of the energy-storage module (5).

## Description

### TECHNICAL FIELD

This disclosure relates to the field of energy-storage technology, and in particular, to an energy-storage module and an electricity-consumption device.

### BACKGROUND

With the increasing development of electrical equipment, higher requirements are raised for the performance of energy-storage batteries that provide power for the electrical equipment. Energy-storage batteries have been widely used for having advantages of high energy density, high operating voltage, and long service life.

Regarding existing energy-storage modules, electrical connection of multiple energy-storage apparatuses is implemented. A mylar film that insulates an electrode component from a housing is provided inside the energy-storage apparatus, and an insulating film is wrapped around an exterior of the electrode component. Since these two insulating structures, the mylar film and the insulating film, are functioning for heat insulation, most of the heat generated by the electrode component of the energy-storage apparatus during electrochemical reactions is conducted and dissipated through metal structures such as tabs, connector, terminal posts, and energy-storage modules. However, the existing energy-storage modules have low heat dissipation efficiency, which easily causes thermal runaway of the energy-storage modules and degrades the safety performance of the energy-storage modules.

### SUMMARY

In view of the above, the disclosure intends to provide an energy-storage module and an electricity-consumption device, so as to solve the technical problem of low heat dissipation efficiency of the energy-storage module in prior art.

In a first aspect, an energy-storage module is provided in the disclosure. The energy-storage module includes multiple energy-storage apparatuses and a bus bar sheet. Each of the multiple energy-storage apparatuses includes an end cover component and a terminal post passing through the end cover component. The bus bar sheet includes multiple bus bar members. The multiple bus bar members are stacked in a thickness direction of the bus bar sheet. Each of the multiple bus bar members includes a first connecting portion, a heat dissipation portion, and a second connecting portion that are sequentially connected in a length direction of the bus bar sheet. The first connecting portion and the second connecting portion are respectively connected to terminal posts of two adjacent energy-storage apparatuses. Any adjacent two heat dissipation portions of the multiple bus bar members cooperatively define multiple heat dissipation through-holes.

In the disclosure, by disposing any adjacent two heat dissipation portions in the multiple bus bar members to cooperatively define multiple heat dissipation through-holes, a heat dissipation area of the heat dissipation portion is expanded, enabling the heat dissipation portion of the bus bar sheet to quickly carry away and dissipate the heat generated by the energy-storage apparatus, thereby improving heat dissipation performance of the energy-storage module. The bus bar sheet is avoided from degradation in strength caused by experiencing long-term high temperature, which may lead to failure of connection between the bus bar sheet and the terminal post caused if there be accidental vibration or shaking, and safety performance and service life of the energy-storage module can be improved. On the other hand, by providing heat dissipation through-hole, mechanical buffering performance of the bus bar sheet can be improved at the heat dissipation portion. Furthermore, the bus bar sheet made of metal can be prevented from increasing in resistance caused by continuous high temperature, thereby improving efficiency of electric energy conduction.

With reference to the first aspect, in some implementations of the first aspect, each of the multiple bus bar members includes a first connecting sheet and a second connecting sheet that are stacked. Multiple first bended protrusions are formed on a side of the heat dissipation portion of the first connecting sheet facing away from the end cover component. Multiple second bended protrusions are formed on a side of the heat dissipation portion of the second connecting sheet facing towards the end cover component. An extending direction of the multiple first bended protrusions and an extending direction of the multiple second bended protrusions are parallel to a width direction of the bus bar sheet. The first bended protrusion and the second bended protrusion are disposed opposite to each other in the thickness direction of the bus bar sheet and cooperatively define the heat dissipation through-hole. The multiple heat dissipation through-holes are disposed in the length direction of the bus bar sheet. Therefore, by disposing the first bended protrusion and the second bended protrusion which bend towards opposite directions, on the one hand, multiple heat dissipation portions are prevented from being pressed against and adhering to each other after the deformation of the bus bar sheet, so that the multiple heat dissipation through-holes can be defined at the heat dissipation portions after the bus bar sheet is formed, thereby increasing apertures of the heat dissipation through-holes and improving the heat dissipation performance of the bus bar sheet at the heat dissipation portion. In addition, all heat dissipation through-holes in the bus bar sheet welded and fixed in the energy-storage module are disposed in the same direction, which facilitates installing a heat exchange air duct at an upper end of the module to communicate the upper side and the lower side, or installing of a guide fan respectively at the upper side and the lower side, thereby further improving overall heat dissipation performance of the energy-storage module. On the other hand, the first bended protrusion and the second bended protrusion are disposed opposite to each other in the thickness direction of the bus bar sheet and cooperatively define the heat dissipation through-holes, so that a bottom surface of the first bended protrusion and a bottom surface of the second bended protrusion can abut against each other, thereby enabling the multiple first connecting portions in the multiple bus bar members to abut against each other and multiple second connecting portions in the multiple bus bar members to abut against each other, and improving upsetting-forming effect and upsetting efficiency for the first connecting portion and the second connecting portion. Furthermore, with the arrangement of the multiple first bended protrusions and the multiple second bended protrusions, the heat dissipation portion can have good buffering function. When the energy-storage apparatus expands, the heat dissipation portion can deform to cause the bus bar sheet to stretch in the length direction of the bus bar. Therefore, the heat dissipation portion has good mechanical buffering performance, thereby reducing pulling force between the first connecting portion and the second connecting portion. As a result, no large shear force will be generated between the terminal post and the first connecting portion or between the terminal post and the second connecting portion. Reliability and stability of a connection between the terminal post and the first connecting portion or between the terminal post and the second connecting portion are improved, and reliable electrical connection between two energy-storage apparatuses is implemented.

With reference to the first aspect, in some implementations of the first aspect, the first connecting sheet is implemented as multiple first connecting sheets and the second connecting sheet is implemented as multiple second connecting sheets. The multiple first connecting sheets and the multiple second connecting sheets are stacked alternately in the thickness direction of the bus bar sheet. The multiple second connecting sheets are disposed at a side of the bus bar sheet facing towards the terminal post. Therefore, by providing multiple first connecting sheets and multiple second connecting sheets, on the one hand, the thickness of the bus bar sheet is increased, thereby improving overall structural strength and current-carrying capacity of the bus bar sheet. On the other hand, the number of heat dissipation through-holes in the heat dissipation portion is increased and the heat dissipation area is expanded, thereby improving the heat dissipation performance and mechanical buffering performance of the bus bar sheet. Furthermore, since the second connecting sheet is disposed at the side of the bus bar sheet facing towards the terminal post, the space occupied by the bus bar sheet in the thickness direction of the bus bar sheet is reduced, thereby making the energy-storage module a compact structure and a reduced volume.

With reference to the first aspect, in some implementations of the first aspect, the multiple heat dissipation through-holes include multiple first through-holes and multiple second through-holes. A first bended recess is defined between two adjacent first bended protrusions. A second bended recess is defined between two adjacent second bended protrusions. Adjacent first bended protrusion and second bended protrusion abuts against each other in the thickness direction of the bus bar sheet to define the first through-hole. Adjacent second bended recess and first bended recess abuts against each other in the thickness direction of the bus bar sheet to define the second through-hole. Therefore, the number of heat dissipation through-holes in the heat dissipation portion is increased and the heat dissipation area is expanded, thereby improving the heat dissipation performance and mechanical buffering performance of the bus bar sheet.

With reference to the first aspect, in some implementations of the first aspect, a first sheet metal part is disposed at a side of the first connecting portion of each of the multiple bus bar members in a width direction of the bus bar sheet. A second sheet metal part is disposed at a side of the second connecting portion of each of the multiple bus bar members in the width direction of the bus bar sheet. All first sheet metal parts are tightly connected through upsetting to form a first pressed portion. All second sheet metal parts are tightly connected through upsetting to form a second pressed portion. All first connecting portions of the multiple bus bar members are tightly connected through upsetting to form a first plate body. All second connecting portions of the multiple bus bar members are tightly connected through upsetting to form a second plate body. In the thickness direction of the bus bar sheet, the first pressed portion is bent relative to the first plate body and presses against the first plate body, and the second pressed portion is bent relative to the second plate body and presses against the second plate body. Therefore, during the assembly of the bus bar sheet, the stacked multiple bus bar members are pre-upset to shape the multiple bus bar members. In this regard, the multiple bus bar members are not pressed very tightly. After the first sheet metal part and the second sheet metal part are folded by 180°, the pre-upset bus bar sheet is pressed tightly by the folded first sheet metal part and second sheet metal part, thereby preventing multiple bus bar members from scattering and affecting subsequent processing and forming of the bus bar sheet, and improving the assembly accuracy.

With reference to the first aspect, in some implementations of the first aspect, a first notch is defined at a position of the first connecting portion of each of the multiple bus bar members that is opposite to the first sheet metal part, and a second notch is defined at a position of the second connecting portion of each of the multiple bus bar members that is opposite to the second sheet metal part. A shape of the first notch matches a shape of the first sheet metal part, and a shape of the second notch matches a shape of the second sheet metal part. Therefore, by providing the first notch on the first connecting portion and the second notch on the second connecting portion, during blanking to form the bus bar sheet, scrap material after processing can be effectively reduced, production cost can be reduced, and processing efficiency can be improved.

With reference to the first aspect, in some implementations of the first aspect, in the width direction of the bus bar sheet, the first notch has a first size, the second notch has a second size, and the first connecting portion has a third size. A ratio of the first size to the third size ranges from 0.2 to 0.45, and a ratio of the second size to the third size ranges from 0.2 to 0.45. Therefore, when the ratio of the first size to the third size and the ratio of the second size to the third size are within the above range, on the one hand, the bus bar sheet has good structural strength to avoid a risk of tearing at the first notch and the second notch when the energy-storage apparatus undergoes thermal expansion. On the other hand, in the width direction of the bus bar sheet, the size of the first sheet metal part and the size of the second sheet metal can be relatively large, so that the first connecting portion and the second connecting portion can be pressed tighter. When the ratio of the first size to the third size and the ratio of the second size to the third size are less than 0.2, the first sheet metal part and the second sheet metal part have weak pressing capability and are prone to warping. When the ratio of the first size to the third size and the ratio of the second size to the third size are greater than 0.45, the bus bar sheet has poor structural strength and is prone to be teared at the first notch and the second notch when the energy-storage apparatus undergoes thermal expansion.

With reference to the first aspect, in some implementations of the first aspect, the first sheet metal part and the second sheet metal part are located on different sides of the energy-storage module in the width direction of the bus bar sheet. The first sheet metal part and the second sheet metal part are bent towards the same direction. Therefore, on the one hand, the multiple bus bar members are prevented from displacement in the width direction and the length direction of the bus bar sheet, and the processing and forming of the bus bar sheet are facilitated; on the other hand, the bus bar sheet can withstand even stress, so as to compress the multiple bus bar members tighter.

With reference to the first aspect, in some implementations of the first aspect, in the length direction of the bus bar sheet, a size of the first sheet metal part gradually decreases from a connection end of the first sheet metal part with the first connecting portion to a free end of the first sheet metal part, and a size of the second sheet metal part gradually decreases from a connection end of the second sheet metal part with the second connecting portion to a free end of the second sheet metal part. Therefore, on the one hand, the free end of the first sheet metal part and the free end of the second sheet metal part are prevented from warping, so that the first sheet metal part and the second sheet metal part can have good compaction effects; on the other hand, the overall blanking manufacturability of the bus bar members is improved, thereby enhancing quality and precision of the bus bar sheet.

With reference to the first aspect, in some implementations of the first aspect, all first connecting portions of the multiple bus bar members are tightly connected through upsetting to form a first plate body, and all second connecting portions of the multiple bus bar members are tightly connected through upsetting to form a second plate body. Therefore, the current-carrying capacity and the structural strength of the bus bar sheet, and a welding strength of the terminal post are improved.

With reference to the first aspect, in some implementations of the first aspect, the terminal post includes a boss portion and a post portion protruding from the boss portion. The first plate body and the second plate body are respectively provided with a positioning recess. The positioning recess is recessed from a surface of the bus bar sheet facing towards the end cover component in a direction away from the energy-storage apparatus. A continuous through-hole is defined at a bottom wall of the positioning recess. At least part of the boss portion is accommodated in the positioning recess and abuts against the bottom wall of the positioning recess and a side wall of the positioning recess. The post portion passes through the continuous through-hole. Therefore, with the design of the positioning recess and the continuous through-hole, on the one hand, the bus bar sheet wraps the boss portion of the terminal post to increase a contact area between the bus bar sheet and the terminal post, and to improve heat conduction efficiency and current-carrying capacity between the bus bar sheet and the terminal post. Therefore, the heat generated by the electrochemical reaction inside the energy-storage apparatus can be quickly conducted to the heat dissipation portion through the bus bar sheet, so as to quickly carry away and dissipate the heat, avoid thermal runaway caused by the energy-storage module experiencing long-term high temperature, and improve the safety performance of the energy-storage module. On the other hand, the positioning recess helps in positioning during the assembly of the terminal post, thereby improving the efficiency and precision for assembling the terminal post and the bus bar sheet.

With reference to the first aspect, in some implementations of the first aspect, the bus bar sheet includes a first section and a second section. Some bus bar members among the multiple bus bar members form the first section, and a remaining bus bar members among the multiple bus bar members form the second section. Each of the first connecting portion and the second connecting portion of the first section defines a first hole, and each of the first connecting portion and the second connecting portion of the second section defines a second hole communicating with the first hole. The first section defines the positioning recess at a position where the first hole is located, and the second section defines the continuous through-hole at a position where the second hole is located. This facilitates the processing and forming of the bus bar sheet, ensures good contact between the bus bar sheet and the boss portion of the terminal post, and improves the heat conduction efficiency between the bus bar sheet and the terminal post.

With reference to the first aspect, in some implementations of the first aspect, the number of the bus bar members in the second section is greater than that in the first section, and the number of the bus bar members in the first section ranges from 1 to 5. Therefore, while increasing the contact area between the bus bar sheet and the terminal post, the overall structural strength of the bus bar sheet is improved to avoid insufficient coverage of the bus bar sheet on an upper surface of the boss portion of the terminal post. Over-penetration (such as a bus bar sheet at the top deforms due to overheating) during laser welding the bus bar sheet with the terminal post is avoided, and welding effect and product yield are improved.

With reference to the first aspect, in some implementations of the first aspect, a first polarity-marking structure is provided on an exposed end face of the post portion facing away from the boss portion. The continuous through-hole exposes the first polarity-marking structure. The exposed end face and a hole wall of the continuous through-hole define an accommodating recess. The first polarity-marking structure is disposed at a bottom of the accommodating recess. Therefore, by disposing the first polarity-marking structure at the bottom of the accommodating recess, wearing and tearing of the first polarity-marking structure is avoided during assembly or use the energy-storage module, so that polarity of the terminal post can be identified quickly and accurately.

With reference to the first aspect, in some implementations of the first aspect, the terminal post includes an exposed end face protruding from the end cover component. The first plate body and the second plate body respectively abut against the exposed end face. The exposed end face is provided with a first polarity-marking structure. In the thickness direction of the bus bar sheet, the first plate body and the second plate body respectively define a continuous through-hole exposing the first polarity-marking structure. The exposed end face and a hole wall of the continuous through-hole form an accommodating recess. The first polarity-marking structure is disposed at a bottom of the accommodating recess. Therefore, on the one hand, by abutting the first plate body and the second plate body against the exposed end face respectively, the structural design of the bus bar sheet is simplified. On the other hand, by disposing the first polarity-marking structure at the bottom of the accommodating recess, wearing and tearing of the first polarity-marking structure is avoided during the assembly or use of the energy-storage module, so that the polarity of the terminal post can be identified quickly and accurately.

With reference to the first aspect, in some implementations of the first aspect, the end cover component includes an end cover, an upper plastic member disposed at the end cover, and an insulating patch both disposed at the end cover. The insulating patch is located between the upper plastic member and the terminal post and is disposed around a periphery of the terminal post. The insulating patch is provided with a second polarity-marking structure, and/or, the upper plastic member is provided with a third polarity-marking structure. This facilitates assembly of the energy-storage apparatus and identification of a positive component and a negative component of energy-storage apparatus.

With reference to the first aspect, in some implementations of the first aspect, the second polarity-marking structure and/or the third polarity-marking structure is/are configured as a hollow structure. Since the insulating patch is black and the end cover is silver and is prone to reflection, by disposing the second polarity-marking structure and/or the third polarity-marking structure as the hollow structure can facilitate the intuitive identification of the positive component and the negative component of the energy-storage apparatus.

In a second aspect, an electricity-consumption device is provided in the disclosure. The electricity-consumption device includes the aforementioned energy-storage module. The energy-storage module provides electrical energy for the electricity-consumption device.

### BRIEF DESCRIPTION OF THE DRAWINGS

To illustrate the technical solutions in embodiments of the disclosure or in the prior art more clearly, the accompanying drawings required for describing the embodiments or the prior art are briefly introduced below. Obviously, the accompanying drawings in the following description show merely some embodiments of the disclosure. For those of ordinary skill in the art, other accompanying drawings may also be obtained based on these drawings without creative efforts.
FIG. 1 is a diagram of an energy-storage module in a household energy-storage scenario provided in embodiments of the disclosure.
FIG. 2 is a schematic partial structural diagram of the energy-storage module illustrated in FIG. 1.
FIG. 3 is a partial cross-sectional view of the energy-storage module in FIG. 2.
FIG. 4 is a schematic structural diagram of a first embodiment of a bus bar sheet of the energy-storage module in a first state illustrated in FIG. 2.
FIG. 5 is an exploded view of the bus bar sheet of the energy-storage module illustrated in FIG. 4.
FIG. 6 is a top view of the bus bar sheet of the energy-storage module in a second state illustrated in FIG. 4.
FIG. 7 is a diagram of a manufacturing process of a first connecting sheet and a second connecting sheet of the bus bar sheet of the energy-storage module illustrated in FIG. 4.
FIG. 8 is an enlarged view of part I of the energy-storage module illustrated in FIG. 3.
FIG. 9 is a schematic structural diagram of the bus bar sheet of the energy-storage module illustrated in FIG. 4, viewed from another perspective.
FIG. 10 is a partial cross-sectional view of a second embodiment of the bus bar sheet of the energy-storage module illustrated in FIG. 2.
FIG. 11 is a schematic partial structure diagram of an energy-storage apparatus of the energy-storage module illustrated in FIG. 2.
FIG. 12 is a partial cross-sectional view of a third embodiment of the bus bar sheet and the energy-storage apparatus of the energy-storage module illustrated in FIG. 2.

Reference numerals: electricity-consumption device 1, wind-energy-conversion apparatus 2, electric-energy-conversion apparatus 3, energy-storage module 5, power grid 7, energy-storage apparatus 100, end cover component 10, end cover 11, mounting recess 111, insulating patch 12, second polarity-marking structure 121, upper plastic member 13, third polarity-marking structure 131, lower plastic member 14, limiting recess 141, limiting boss 142, terminal post 20, boss portion 21, post portion 22, exposed end face 221, welding area 222, first polarity-marking structure 23, flange portion 24, housing 30, electrode component 40, connector 41, cell 42, explosion-proof valve 50, bus bar sheet 500, bus bar member 60, first connecting portion 610, first plate body 6101, first pressed portion 6102, heat dissipation portion 620, heat dissipation through-hole 6201, first through-hole 6202, second through-hole 6203, second connecting portion 630, second plate body 6301, second pressed portion 6302, continuous through-hole 601, accommodating recess 602, positioning recess 603, first section 650, first hole 6501, second section 660, second hole 6601, first connecting sheet 61, first bended protrusion 611, first channel 6111, first abutting portion 612, first bended recess 613, second connecting sheet 63, second bended protrusion 631, second channel 6311, second abutting portion 632, second bended recess 633, first sheet metal part 71, first rounded corner 711, first notch 72, second sheet metal part 73, second rounded corner 731, second notch 74, strip 80, first cutting line 81, second cutting line 82, scrap material 83, first size L1, second size L2, third size L3, length direction X, width direction Y, thickness direction Z.

The following specific implementations will further illustrate the disclosure with reference to the aforementioned accompanying drawings.

### DETAILED DESCRIPTION

Technical solutions of embodiments of the disclosure will be described clearly and completely below with reference to accompanying drawings in embodiments of the disclosure. Apparently, embodiments described herein are merely some embodiments, rather than all embodiments, of the disclosure. Based on embodiments of the disclosure, all other embodiments obtained by those of ordinary skill in the art without creative efforts shall fall within the protection scope of the disclosure.

It can be understood that the terms in the specification, claims, and accompanying drawings of the disclosure are merely intended for describing particular embodiments rather than limiting the disclosure. The terms "first", "second", and the like in the specification and claims of the disclosure and the aforementioned accompanying drawings are used for distinguishing different objects, rather than for describing a specific order. The singular forms "a", "an" and "the" are intended to include the plural forms as well, unless the context clearly indicates otherwise. The term "include" and any variation thereof is intended to cover a non-exclusive inclusion. In addition, the disclosure may be implemented in many different forms, and is not limited to the embodiments described. The following detailed embodiments are provided to facilitate a more thorough understanding of the disclosure, wherein the terms indicating orientation, such as "up", "down", "left", "right", and the like are merely for the positions of the illustrated structures in the corresponding accompanying drawings. In the description of the disclosure, unless specified or limited otherwise, the terms "mounted", "linked", "connected", and "disposed on" may be understood in a broad sense. For example, they may refer to a fixed connection, a detachable connection, or an integral connection; may also refer to a mechanical connection; may also refer to a direct connection or an indirect connection via an intermediate; and may also refer to an internal communication of two elements. The specific meanings of the above terms in the disclosure can be understood by those of ordinary skill in the art according to specific situations.

The subsequent descriptions in the specification are preferred embodiments for implementing the disclosure. However, the above description is intended for illustrating the general principle of the disclosure rather than limiting the scope of the disclosure. The protection scope of the disclosure shall be subject to what is defined in the appended claims.

First, the basic concepts involved in embodiments of the disclosure are briefly introduced below.

The term "energy-storage apparatus" refers to an apparatus that converts its stored chemical energy into electrical energy, that is, an apparatus that converts pre-stored energy into electrical energy available for external use.

Since energy required by people has strong temporal and spatial characteristics, in order to use energy in a reasonable manner and improve energy utilization, a medium or a device is required to store energy in the same energy form or in another energy form converted and then to release energy in a specific energy form based on requirements of future applications. At present, to achieve major goal of carbon neutrality, generation of green electric energy is generally dependent on photovoltaics, wind power, water potential, and the like, to replace fossil energy. However, in general, wind energy, solar energy, and the like are strongly intermittent and volatile, resulting in an unstable power grid, insufficient power supply at a power consumption peak, and overmuch power supply at a power consumption valley. In addition, an unstable voltage may further damage electric power. Therefore, "curtailment of wind and photovoltaics" may occur due to insufficient power demand or insufficient power-grid admitting ability, and energy storage is required to solve these problems. That is, electric energy is stored by converting it into other forms of energy by physical or chemical means, and energy is released by converting it into electric energy when needed. In brief, energy storage is similar to a large "power bank", which stores electric energy when photovoltaics and wind energy are sufficient and releases stored electric power when needed.

Taking electrochemical energy-storage as an example, an energy-storage apparatus is provided in the scheme. The energy-storage apparatus is provided with a chemical battery, in which chemical elements are mainly used as an energy-storage media. A charging and discharging process is accompanied by a chemical reaction or change of the energy-storage media. In short, the electric energy generated from wind energy and solar energy is stored in the chemical battery, is released for use when external electric energy consumption reaches a peak, or is transferred to a place experiencing power shortage for subsequent use.

At present, energy storage has a wide range of application scenarios, including energy storage at a (wind or solar) power-generation-side, energy storage at a grid-ide, energy storage at a base-station-side, and energy storage at a user-side, etc., with corresponding types of energy-storage apparatus as follows.
(1) A large-sized energy-storage container, applied in an energy-storage scenario at the grid-side, can serve as a high-quality power source for active and reactive power regulation in the grid, which can realize matching of electric energy loads in terms of time and space, enhance the capacity for integration of renewable energy, and is of great significance in backup of the power grid system, relieving the pressure of power supply at a peak load, and peak and frequency regulation.
(2) Small and medium-sized energy-storage cabinets, applied in industrial and commercial energy-storage scenarios at the user-side (such as banks, shopping malls, etc.), are mainly operated in a "peak-shaving and valley-filling" mode. There is a significant price difference in electricity bills between peak and valley according to electricity demand. After users have the energy-storage apparatus, in order to reduce costs, the energy-storage cabinet/box is usually charged during low electricity price period; and electricity stored in the energy-storage apparatus is discharged for use to achieve the purpose of saving electricity bills during the high electricity price period. In addition, in remote regions and regions prone to natural disasters such as earthquakes and hurricanes, the presence of household energy-storage apparatus is equivalent to users providing backup power for themselves and the power grid, avoiding inconvenience of frequent power outages caused by disasters or other reasons.

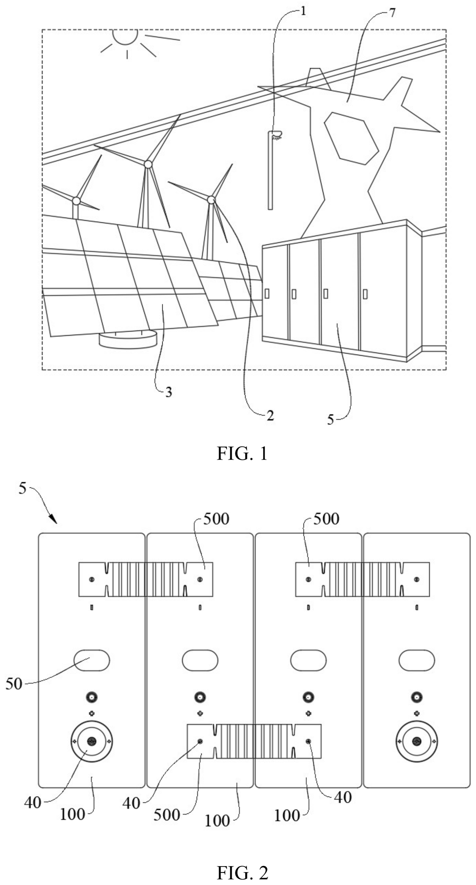

The embodiments of the disclosure are described by taking a household energy-storage scenario in user-side energy storage the as an example. FIG. 1 is a diagram of an energy-storage module 5 in a household energy-storage scenario provided in embodiments of the disclosure. It can be noted that the energy-storage module 5 in the disclosure is not limited to the household energy-storage scenario.

As illustrated in FIG. 1, the energy-storage module 5 provided in embodiments of the disclosure is applied to an energy-storage system for users. The energy-storage system for users includes an electricity-consumption device 1, a wind-energy-conversion apparatus 2 (such as but is not limited to a wind turbine), an electric-energy-conversion apparatus 3 (such as but is not limited to a photovoltaic panel), the energy-storage module 5, a power grid 7, etc. The energy-storage module 5 can be used as an energy-storage cabinet, and can be mounted on an outdoor wall by means of, but not limited to, wall hanging. Specifically, the photovoltaic panel can convert solar energy into electric energy during the low electricity price period, and the energy-storage module 5 is used to store the electric energy and supply it to the power grid 7 during the high electricity price period, or to supply power when the power grid 7 is off/out of power. Transmission of electric energy can be carried out using high-voltage cables.

It can be understood that, the energy-storage module 5 includes multiple energy-storage apparatuses. The energy-storage apparatus may include, but is not limited to, a single battery, a battery pack, a battery system, etc. When the energy-storage apparatus is a single battery, it can be a square battery. The single battery includes, but is not limited to, at least one of a power battery, a fuel battery, a super-capacitor, etc. The power battery includes, but is not limited to, a lithium-ion power battery, a nickel-metal hydride power battery, a super-capacitor, etc.

Exemplarily, the electricity-consumption device 1 includes, but is not limited to, a street lamp, an industrial equipment, a household appliance, etc. The electricity-consumption device 1 in embodiments of the disclosure may further include, but is not limited to, a large-scale equipment such as a wind energy station, an industrial and commercial power supply equipment, a power supply base station, etc. The embodiments of the disclosure are not limited in this regard. Both the energy-storage apparatus and the energy-storage module 5 can provide electric energy for the electricity-consumption device 1.

Reference can be made to FIG. 2, where FIG. 2 is a schematic partial structural diagram of the energy-storage module 5 illustrated in FIG. 1. The energy-storage module 5 can be used to supply electric energy for the electricity-consumption device 1. The energy-storage module 5 includes multiple energy-storage apparatuses 100 and a bus bar sheet (s) 500. The multiple energy-storage apparatuses 100 are electrically connected via the bus bar sheet 500, thereby improving heat dissipation performance and safe usability of the energy-storage module 5. The energy-storage module 5 may also include a box body, where the multiple energy-storage apparatuses 100 and the bus bar sheet 500 are accommodated in the box body. The multiple energy-storage apparatuses 100 can be connected in series, or can be connected in parallel, or can be connected in a combination of series and parallel. It can be noted that the combination of series and parallel means that among the multiple energy-storage apparatuses 100 some are connected in series and other are connected in parallel. For example, the multiple energy-storage apparatuses 100 are disposed in rows and in columns, where multiple energy-storage apparatuses 100 in the same row are connected in series, and multiple energy-storage apparatuses 100 in the same column are connected in parallel. Exemplarily, in the embodiment, the energy-storage module 5 includes four energy-storage apparatuses 100 disposed in columns, and the four energy-storage apparatuses 100 are connected in series. It can be noted that the number of energy-storage apparatuses 100 is merely used for description, which is not limited in the disclosure. For example, the number of energy-storage apparatuses 100 can be, but is not limited to, 2, 3, 6, or more than 6, etc. The energy-storage apparatus 100 can be the square battery, a cylindrical battery, a platy battery, or a battery of other shapes. The following takes the square battery as an example for detailed description.

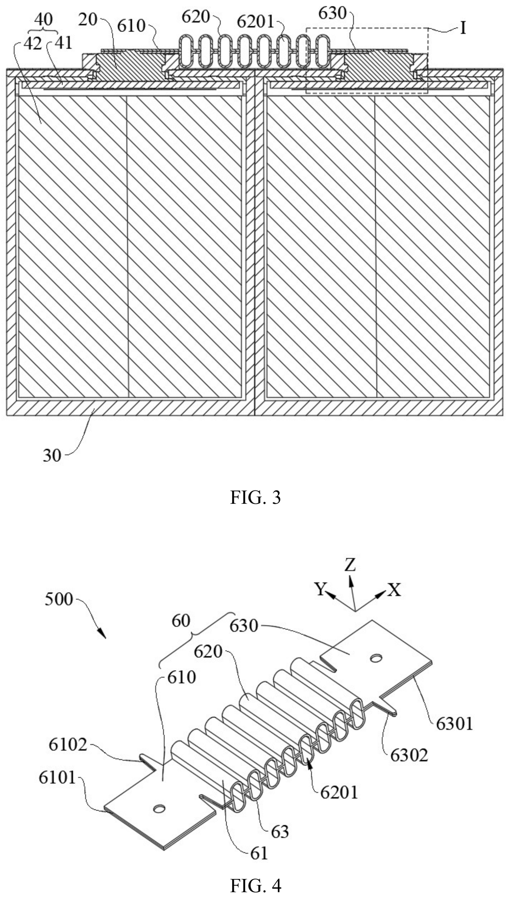

Reference can be made to FIG. 2 and FIG. 3, where FIG. 3 is a partial cross-sectional view of the energy-storage module 5 illustrated in FIG. 2. The energy-storage apparatus 100 includes an end cover component 10 and a terminal post 20 passing through the end cover component 10. The energy-storage apparatus 100 further includes a housing 30 and an electrode component 40. The electrode component 40 is disposed inside the housing 30, and the housing 30 is hermetically fixed to the end cover component 10 to encapsulate the electrode component 40. Specifically, the housing 30 stores electrolyte so that the electrolyte can infiltrate the electrode component 40. One end of the terminal post 20 is connected to the electrode component 40, and the other end of the terminal post 20 passes through the end cover component 10 and is connected to the bus bar sheet 500 for signal transmission between two adjacent energy-storage apparatuses 100. The signals include, but are not limited to, an electric signal, a sampling data signal, and other signals.

Specifically, the energy-storage apparatus 100 includes two terminal posts 20, namely a positive terminal post and a negative terminal post. The electrode component 40 includes two connecters 41, one cell 42, and two tabs. The two tabs respectively extend from the cell 42, and the two tabs include a positive tab and a negative tab. The two connecters 41 include a positive connecter connected to the positive tab and the positive terminal post, and a negative connecter connected to the negative tab and the negative terminal post. The positive terminal post, the negative terminal post, the positive tab, the negative tab, the positive connecter, and the negative connecter are all made of metal, so that the heat generated by the energy-storage apparatus 100 can be conducted out of the energy-storage apparatus 100 via a first conduction path and a second conduction path. The first conduction path is formed by the positive tab, the positive connecter, and the positive terminal post, and the second conduction path is formed by the negative tab, the negative connecter, and the negative terminal post. In this regard, heat dissipation of the energy-storage apparatus 100 is implemented.

It can be noted that FIG. 3 merely intends to schematically describe an arrangement of the end cover component 10, the housing 30, and the electrode component 40, but not to specifically limit the connection positions, connection relationships, and specific structures of each element. FIG. 3 is merely a schematic partial structure of the energy-storage apparatus 100 in embodiments of the disclosure, and does not constitute a specific limitation to the energy-storage apparatus 100. In other embodiments of the disclosure, the energy-storage apparatus 100 may include more or less components than those illustrated in FIG. 3, or combine some components, or have different components. For example, the energy-storage apparatus 100 may further include, but is not limited to, a stress-relief member, a wiring harness, etc.

For accuracy of description, all references to directions in the disclosure shall be based on FIG. 4. The term "length direction X" refers to a direction along a long edge of a cross section of the bus bar sheet 500 taken perpendicular to a direction for stacking the multiple bus bar members 60. That is, the length direction is a left-right direction (where a positive direction of an X-axis forwards to right). The term "width direction Y" refers to a direction along a short edge of the cross-section of the bus bar sheet 500 taken perpendicular to the direction for stacking the multiple bus bar members 60. That is, the width direction is a front-back direction (where a positive direction of a Y-axis forwards to back). The term "thickness direction Z" refers to a direction parallel to the direction for stacking the multiple bus bar members 60. That is, the thickness direction is an up-down direction (where a positive direction of a Z-axis is upward). The length direction X, the width direction Y, and the thickness direction Z together constitute three orthogonal directions of the bus bar sheet 500. For convenience of description, the up-down, left-right, and front-back directions in the disclosure are relative positions and do not constitute a restrictive implementation limitation. The length direction X, the width direction Y, and the thickness direction Z of the bus bar sheet 500 can be customized according to specific structures of the product and viewing angles presented in the accompanying drawings, which are not limited in the disclosure.

Reference can be made to FIG. 2 and FIG. 4, where FIG. 4 is a schematic structural diagram of a first embodiment of a bus bar sheet 500 of the energy-storage module 5 in a first state illustrated in FIG. 2. It can be noted that the term "first state" in the disclosure refers to a state where a first sheet metal part 71 and a second sheet metal part 73 of the bus bar sheet 500 are in unfolded state, that is, the first sheet metal part 71 and the second sheet metal part 73 are not folded. The term "second state" refers to a state where the first sheet metal part 71 and the second sheet metal part 73 of the bus bar sheet 500 are in folded state, that is, the first sheet metal part 71 and the second sheet metal part 73 are folded. The bus bar sheet 500 includes multiple bus bar members 60. The multiple bus bar members 60 are stacked in the thickness direction Z of the bus bar sheet 500. Each bus bar member 60 includes a first connecting portion 610, a heat dissipation portion 620, and a second connecting portion 630 that are sequentially connected in the length direction X of the bus bar sheet 500. The first connecting portion 610 and the second connecting portion 630 are respectively connected to terminal posts 20 of two adjacent energy-storage apparatuses 100, so as to electrically connected the two adjacent energy-storage apparatuses 100. Any adjacent two heat dissipation portions 620 of the multiple bus bar members 60 cooperatively define multiple heat dissipation through-holes 6201.

In the disclosure, by disposing any adjacent two heat dissipation portions 620 of the multiple bus bar members 60 to cooperatively define multiple heat dissipation through-holes 6201, a heat dissipation area of the heat dissipation portion 620 is expanded, enabling the heat dissipation portion 620 of the bus bar sheet 500 to quickly carry away and dissipate the heat generated by the energy-storage apparatus 100, thereby improving heat dissipation performance of the energy-storage module 5. The bus bar sheet 500 and the energy-storage module 5 are avoided from degradation in strength caused by experiencing long-term high temperature, which may lead to failure of connection between the bus bar sheet 500 and the terminal post 20 caused by accidental vibration or shaking, and safety performance and service life of the energy-storage module 5 can be improved. On the other hand, by providing heat dissipation through-hole 6201, mechanical buffering performance of the bus bar sheet 500 can be improved at the heat dissipation portion 620. Furthermore, the bus bar sheet 500 made of metal can be prevented from increasing in resistance caused by continuous high temperature, thereby improving efficiency of electric energy conduction.

Exemplarily, in this embodiment, each of the multiple bus bar members 60 include a first connecting sheet 61 and a second connecting sheet 63 that are stacked. Multiple first bended protrusions 611 are formed on a side of the heat dissipation portion 620 of the first connecting sheet 61 facing away from the end cover component 10. Multiple second bended protrusions 631 are formed on a side of the heat dissipation portion 620 of the second connecting sheet 63 facing towards the end cover component 10. An extending direction of the multiple first bended protrusions 611 and an extending direction of the multiple second bended protrusions 631 are parallel to the width direction Y of the bus bar sheet 500. The first bended protrusion 611 and the second bended protrusion 631 are disposed opposite to each other in the thickness direction Z of the bus bar sheet 500 and cooperatively define the heat dissipation through-hole 6201. The multiple heat dissipation through-holes 6201 are disposed in the length direction X of the bus bar sheet 500. Therefore, by disposing the first bended protrusion 611 and the second bended protrusion 631 which bend towards opposite directions, on the one hand, multiple heat dissipation portions 620 are prevented from being pressed against and adhering to each other after the deformation of the bus bar sheet 500, so that the multiple heat dissipation through-holes 6201 can be defined at the heat dissipation portion 620 after the bus bar sheet 500 is formed, thereby increasing apertures of the heat dissipation through-holes 6201 and improving the heat dissipation performance of the bus bar sheet 500 at the heat dissipation portion 620. In addition, all heat dissipation through-holes 6201 in the bus bar sheet 500 welded and fixed in the energy-storage module 5 are disposed in the same direction. For example, space defined by the first bended protrusion 611 and space defined by the second bended protrusion 631 are in communication in an up-and-down direction, which facilitates installing a heat exchange air duct at an upper end of the energy-storage module 5 to communicate the upper side and the lower side, or installing a guide fan respectively at the upper side and the lower side, thereby further improving overall heat dissipation performance of the energy-storage module 5. On the other hand, the first bended protrusion 611 and the second bended protrusion 631 are disposed opposite to each other in the thickness direction Z of the bus bar sheet 500 and cooperatively define the heat dissipation through-hole 6201, so that a bottom surface of the first bended protrusion 611 and a bottom surface of the second bended protrusion 631 can abut against each other, thereby enabling the multiple first connecting portions 610 in the multiple bus bar members 60 to abut against each other and multiple second connecting portions 630 in the multiple bus bar members 60 to abut against each other, and improving upsetting-forming effect and upsetting efficiency for the first connecting portion 610 and the second connecting portion 630. Furthermore, with the arrangement of the multiple first bended protrusions 611 and the multiple second bended protrusions 631, the heat dissipation portion 620 can have good buffering function. When the energy-storage apparatus 100 expands, the heat dissipation portion 620 can deform to cause the bus bar sheet 500 to stretch in the length direction X. Therefore, the heat dissipation portion 620 has good mechanical buffering performance, thereby reducing pulling force between the first connecting portion 610 and the second connecting portion 630. As a result, no large shear force will be generated between the terminal post 20 and the first connecting portion 610 or between the terminal post 20 and the second connecting portion 630. Reliability and stability of a connection between the terminal post 20 and the first connecting portion 610 or between the terminal post 20 and the second connecting portion 630 are improved, and reliable electrical connection between two energy-storage apparatuses 100 is implemented.

In this embodiment, all heat dissipation portions 620 of the multiple bus bar members 60 are disposed independently to keep each of the multiple heat dissipation portions 620 of the bus bar sheet 500 independent and present a loose state, so that when the energy-storage apparatus 100 expands, the multiple heat dissipation portions 620 are prone to be deformed, thereby improving the mechanical buffering performance. In some embodiments, at least some of the heat dissipation portions 620 are disposed independently, and the other heat dissipation portions 620 are fixedly connected together, so that at least some adjacent pairs of heat dissipation portions 620 can abut against each other to define heat dissipation through-holes 6201, and the heat dissipation through-holes 6201 are avoided from size reduction caused by the multiple heat dissipation portions 620 being attached to each other after the deformation of the bus bar sheet 500. Therefore, the bus bar sheet 500 has both good heat dissipation performance and mechanical buffering performance.

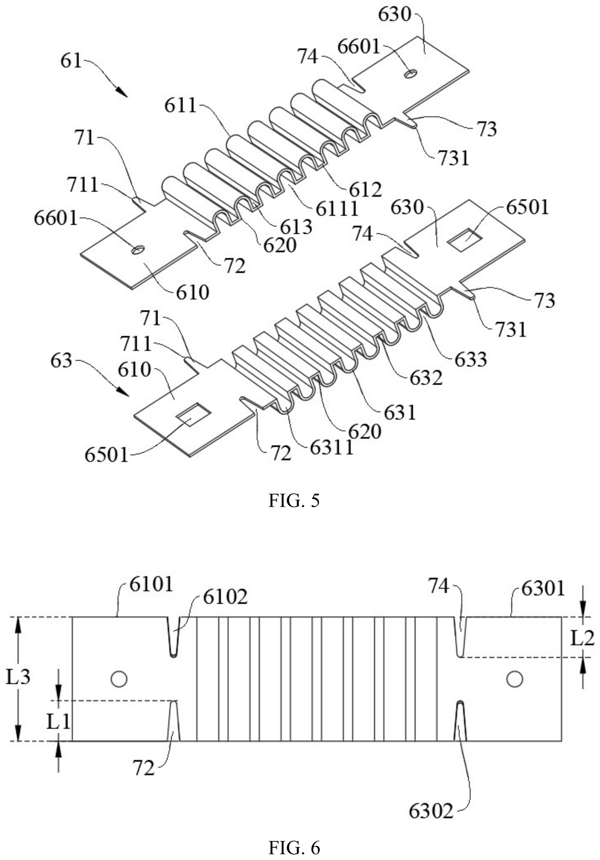

Reference can be made to FIG. 4 and FIG. 5, where FIG. 5 is an exploded view of the bus bar sheet 500 of the energy-storage module 5 in FIG. 4. The first bended protrusion 611 is bent from the first connecting sheet 61 in a direction away from the second connecting sheet 63 to define a first channel 6111. The second bended protrusion 631 is recessed from the second connecting sheet 63 in a direction away from the first connecting sheet 61 to define a second channel 6311. The first channel 6111 and the second channel 6311 cooperatively define the heat dissipation through-hole 6201. The multiple first bended protrusions 611 and multiple second bended protrusions 631 are disposed symmetrically, which facilitates processing and forming of the bus bar sheet 500, and ensures that the heat dissipation portion 620 can withstand even stress as a whole and prone to deform when the energy-storage apparatus 100 undergoes thermal expansion. The multiple first bended protrusions 611 are spaced apart, and the multiple second bended protrusions 631 are also spaced apart, thereby improving efficiency of heat exchange between the heat dissipation portion 620 and ambient air, and enhancing the heat dissipation performance. A first abutting portion 612 is connected between two adjacent first bended protrusions 611, and a second abutting portion 632 is connected between two adjacent first bended recesses 613. The first abutting portion 612 is attached to the second abutting portion 632, so that two adjacent heat dissipation portions 620 can abut against each other to define the heat dissipation through-hole 6201. The first abutting portion 612 is flush with the first connecting portion 610 and the second connecting portion 630 of the first connecting sheet 61 on a side facing towards the second connecting sheet 63, and the second abutting portion 632 is flush with the first connecting portion 610 and the second connecting portion 630 of the second connecting sheet 63 on a side facing towards the first connecting sheet 61, which facilitates the processing and forming of the bus bar sheet 500. The first bended protrusion 611 and the second bended protrusion 631 are configured as arc-shaped structures, thereby avoiding scratching of the bus bar sheet 500 during the assembly, improving the safety and aesthetics of use, facilitating the processing and forming, increasing space utilization, and preventing the bus bar sheet 500 from breaking at a bending fatigue area of the first bended protrusion 611 and the second bended protrusion 631.

The heat dissipation portion 620 is configured as a wave-shaped structure, so that the heat dissipation portion 620 has good buffering performance. Exemplarily, in this embodiment, a first bended recess 613 is defined between two adjacent first bended protrusions 611, and a second bended recess 633 is defined between two adjacent second bended protrusions 631. The first bended protrusions 611 and the first bended recesses 613, as well as the second bended protrusions 631 and the second bended recesses 633, are disposed alternately in the length direction X of the bus bar sheet 500 to form the wave-shaped structure.

Reference can be made to FIG. 4, FIG. 5, and FIG. 6, where FIG. 6 is a top view of the bus bar sheet 500 of the energy-storage module 5 in a second state illustrated in FIG. 4. In some embodiments, a first sheet metal part 71 is disposed at a side of the first connecting portion 610 of each of the multiple bus bar members 60 in the width direction Y of the bus bar sheet 500, and a second sheet metal part 73 is disposed at a side of the second connecting portion 630 of each of the multiple bus bar members 60 in the width direction Y of the bus bar sheet 500. All first sheet metal parts 71 are tightly connected through upsetting to form a first pressed portion 6102, and all second sheet metal parts 73 are tightly connected through upsetting to form a second pressed portion 6302. All first connecting portions 610 of the multiple bus bar members 60 are tightly connected through upsetting to form a first plate body 6101, and all second connecting portions 630 of the multiple bus bar members 60 are tightly connected through upsetting to form a second plate body 6301, thereby improving the current-carrying capacity, structural strength, and welding strength with the terminal post 20 of the bus bar sheet 500. In the thickness direction Z of the bus bar sheet 500, the first pressed portion 6102 is bent relative to the first plate body 6101 and presses against the first plate body 6101, and the second pressed portion 6302 is bent relative to the second plate body 6301 and presses against the second plate body 6301. Therefore, during the assembly of the bus bar sheet 500, the stacked multiple bus bar members 60 are pre-upset to shape the multiple bus bar members 60. In this regard, the multiple bus bar members 60 are not pressed very tightly. After the first sheet metal part 71 and the second sheet metal part 73 are folded by 180°, the pre-upset bus bar sheet 500 is pressed tightly by the folded first sheet metal part 71 and second sheet metal part 73, thereby preventing the multiple bus bar members 60 from scattering and affecting subsequent processing and forming of the bus bar sheet 500, and improving the assembly accuracy.

The first sheet metal part 71 and the second sheet metal part 73 are located on different sides of the energy-storage module 5 in the width direction Y of the bus bar sheet 500. The first sheet metal part 71 and the second sheet metal part 73 are bent towards the same direction. Therefore, on the one hand, the multiple bus bar members 60 are prevented from displacement in the width direction Y and length direction X of the bus bar sheet 500, the processing and forming of the bus bar sheet 500 are facilitated; on the other hand, the bus bar sheet 500 can withstand even stress, so as to compress the multiple bus bar members 60 tighter.

In some embodiments, in the length direction X of the bus bar sheet 500, a size of the first sheet metal part 71 gradually decreases from a connection end of the first sheet metal part 71 with the first connecting portion 610 to a free end of the first sheet metal part 71, and a size of the second sheet metal part 73 gradually decreases from a connection end of the second sheet metal part 73 with the second connecting portion 630 to a free end of the second sheet metal part 73. Therefore, on the one hand, the free end of the first sheet metal part 71 and the free end of the second sheet metal part 73 are prevented from warping, so that the first sheet metal part 71 and the second sheet metal part 73 can have good compaction effects; on the other hand, the overall blanking manufacturability of the bus bar members 60 is improved, thereby enhancing quality and precision of the bus bar sheet 500. For example, in this embodiment, the shape of the first sheet metal part 71 and the second sheet metal part 73 are roughly triangular. In some embodiments, the shape of the first sheet metal part 71 and the second sheet metal part 73 can also be, but not limited to, elliptical, rectangular, etc.

The free end of the first sheet metal part 71 facing away from the first connecting portion 610 is provided with a first rounded corner 711, and the free end of the second sheet metal part 73 facing away from the second connecting portion 630 is provided with a second rounded corner 731, so as to prevent the sharp corners of the first sheet metal part 71 and the second sheet metal part 73 from warping, and the first sheet metal part 71 and the second sheet metal part 73 can have good pressing effects.

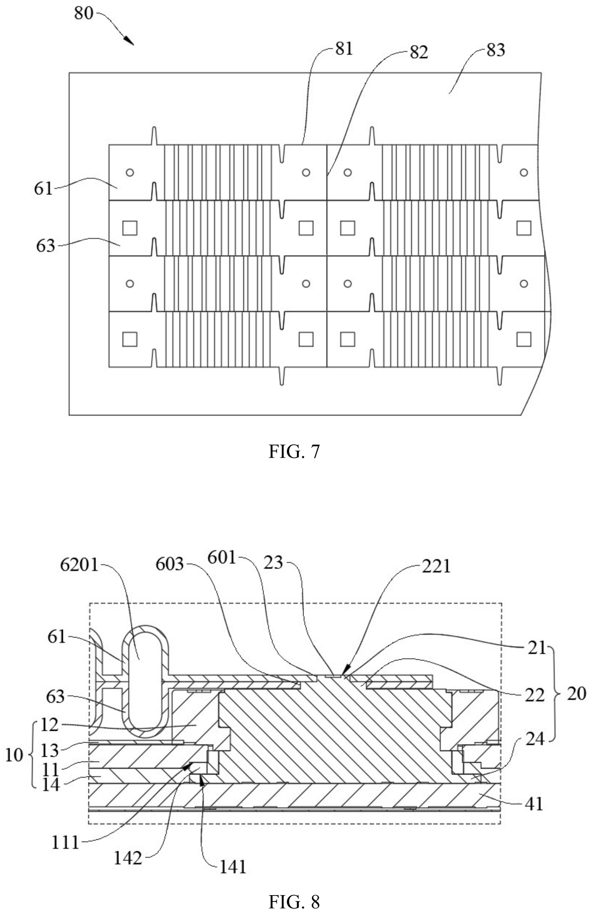

Reference can be made to FIG. 4, FIG. 5 to FIG. 7, where FIG. 7 is a producing process diagram of a first connecting sheet 61 and a second connecting sheet 63 of the bus bar sheet 500 of the energy-storage module 5 illustrated in FIG. 4. In some embodiments, a first notch 72 is defined at a position of the first connecting portion 610 of the multiple bus bar members 60 that is opposite to the first sheet metal part 71, and a second notch 74 is defined at a position of the second connecting portion 630 of the multiple bus bar members 60 that is opposite to the second sheet metal part 73. A shape of the first notch 72 matches a shape of the first sheet metal part 71, and a shape of the second notch 74 matches a shape of the second sheet metal part 73. Therefore, by providing the first notch 72 on the first connecting portion 610 and the second notch 74 on the second connecting portion 630, during blanking to form the bus bar sheet 500, scrap material 83 generated can be effectively reduced, production cost can be reduced, and processing efficiency can be improved.

A strip 80 for producing the bus bar member 60 is configured as a jelly-roll-type structure. Stamping equipment can stamp the strip 80 to form the first bended protrusion 611 and the second bended protrusion 631, where the first bended protrusion 611 and the second bended protrusion 631 are stamped in opposite directions. Blanking equipment can cut the strip 80 along a first cutting line 81 and a second cutting line 82 to obtain the first connecting sheet 61 and the second connecting sheet 63. Since the shape of the first notch 72 matches the shape of the first sheet metal part 71, and the shape of the second notch 74 matches the shape of the second sheet metal part 73, the scrap material 83 can be effectively reduced during blanking the bus bar sheet 500. In addition, the number of blanking operations can be reduced, and the processing and production efficiency can be improved. Exemplarily, in this embodiment, the shape and size of outer contour lines of the first connecting sheet 61 and the second connecting sheet 63 are the same.

In the width direction Y of the bus bar sheet 500, the first notch 72 has a first size L1, the second notch 74 has a second size L2, and the first connecting portion 610 has a third size L3. A ratio of the first size L1 to the third size L3 ranges from 0.2 to 0.45, and a ratio of the second size L2 to the third size L3 ranges from 0.2 to 0.45. In this embodiment, the first size L1 is equal to the second size L2. Therefore, when the ratio of the first size L1 to the third size L3 and the ratio of the second size L2 to the third size L3 are within the above range, on the one hand, the bus bar sheet 500 has good structural strength to avoid the risk of tearing at the first notch 72 and the second notch 74 when the energy-storage apparatus 100 undergoes thermal expansion. On the other hand, in the width direction Y of the bus bar sheet 500, the size of the first sheet metal part 71 and the size of the second sheet metal part 73 can be relatively large, so that the first connecting portion 610 and the second connecting portion 630 can be pressed tighter. When the ratio of the first size L1 to the third size L3 and the ratio of the second size L2 to the third size L3 are less than 0.2, the first sheet metal part 71 and the second sheet metal part 73 have weak pressing capability and are prone to warping. When the ratio of the first size L1 to the third size L3 and the ratio of the second size L2 to the third size L3 are greater than 0.45, the bus bar sheet 500 has poor structural strength and is prone to be teared at the first notch 72 and the second notch 74 when the energy-storage apparatus 100 undergoes thermal expansion. The ratio of the first size L1 to the third size L3 can be, but is not limited to, 0.2, 0.25, 0.3, 0.35, 0.4, or 0.45, etc. The ratio of the second size L2 to the third size L3 can be, but is not limited to, 0.2, 0.25, 0.3, 0.35, 0.4, or 0.45, etc. The ratio of the first size L1 to the third size L3 and the ratio of the second size L2 to the third size L3 can be designed according to factors such as the structural strength and the size of the bus bar sheet 500. The disclosure is not limited in this regard.

In some implementations, the free end of the first sheet metal part 71 facing away from the first connecting portion 610 is bent and extends into the first notch 72, and the free end of the second sheet metal part 73 facing away from the second connecting portion 630 is bent and extends into the second notch 74, thereby improving compression performance of the first sheet metal part 71 and the second sheet metal part 73.

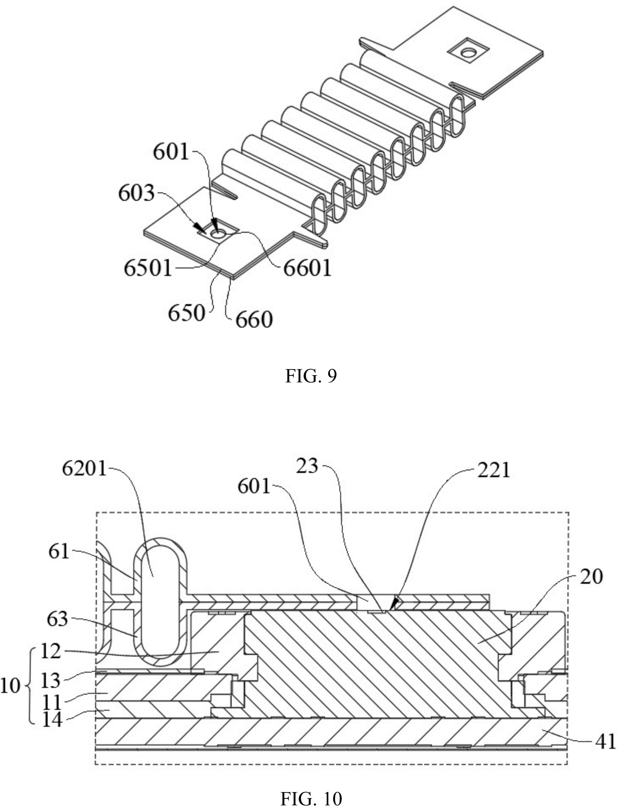

Reference can be made to FIG. 3, FIG. 4, FIG. 8, and FIG. 9, FIG. 8 is an enlarged view of part I of the energy-storage module 5 illustrated in FIG. 3, and FIG. 9 is a schematic structural diagram of the bus bar 500 of the energy-storage module 5 illustrated in FIG. 4, viewed from another perspective. The first connecting portion 610 and the second connecting portion 630 are respectively welded to the terminal post 20, therefore the multiple energy-storage apparatuses 100 are electrically connected. Specifically, the first plate body 6101 and the second plate body 6301 are respectively welded to a post portion 22, and the heat dissipation portion 620 is suspended above the end cover component 10. Therefore, by respectively welding the first plate body 6101 and the second plate body 6301 to the post portion 22, and suspending the heat dissipation portion 620 above the energy-storage module 5, signal transmission is implemented between two adjacent energy-storage apparatuses 100, and the heat dissipation effect of the energy-storage apparatus 100 is improved. In some embodiments, the heat dissipation portion 620 abuts against the end cover component 10 of the energy-storage apparatus 100, as such the energy-storage module 5 is in compact structure.

Exemplarily, in this embodiment, the terminal post 20 includes a boss portion 21 and the post portion 22 protruding from the boss portion 21. The first plate body 6101 and the second plate body 6301 are respectively provided with a positioning recess 603. The positioning recess 603 is recessed from a surface of the bus bar 500 facing towards the end cover component 10 in a direction away from the energy-storage apparatus 100. A continuous through-hole 601 is defined at a bottom wall of the positioning recess 603. At least part of the boss portion 21 is accommodated in the positioning recess 603 and abuts against the bottom wall of the positioning recess 603 and a side wall of the positioning recess 603. The post portion 22 passes through the continuous through-hole 601. Therefore, with the design of the positioning recess 603 and the continuous through-hole 601, on the one hand, the bus bar 500 wraps the boss portion 21 of the terminal post 20 to increase a contact area between the bus bar 500 and the terminal post 20, and to improve heat conduction efficiency and current-carrying capacity between the bus bar 500 and the terminal post 20. Therefore, the heat generated by the electrochemical reaction inside the energy-storage apparatus 100 can be quickly conducted to the heat dissipation portion 620 through the bus bar 500 to be quickly dissipated, so as to avoid thermal runaway caused by the energy-storage module 5 experiencing long-term high temperature, and improve the safety performance of the energy-storage module 5. On the other hand, the positioning recess 603 helps in positioning during the assembly of the terminal post 20, thereby improving the efficiency and precision for assembling the terminal post 20 and the bus bar 500.

Reference can be made to FIG. 4, FIG. 5, and FIG. 10, where FIG. 10 is a partial cross-sectional view of a second embodiment of the bus bar sheet 500 of the energy-storage module 5 illustrated in FIG. 2. A first polarity-marking structure 23 is provided on an exposed end face 221 of the post portion 22 facing away from the boss portion 21. The continuous through-hole 601 exposes the first polarity-marking structure 23, thereby facilitating identification of polarity of the terminal post 20 and improving efficiency for assembly and maintenance. The first polarity-marking structure 23 is recessed from the exposed end face 221 of the post portion 22 towards the boss portion 21. Therefore, wearing and tearing of the first polarity-marking structure 23 is avoided during the assembly or use of the energy-storage module 5, so that the polarity of the terminal post 20 can be identified quickly and accurately. Exemplarily, in this embodiment, the first polarity-marking structure 23 provided on the positive terminal post is configured as a mark pattern of "+", and the first polarity-marking structure 23 provided on the negative terminal post is configured as a mark pattern of "-". In some embodiments, the first polarity-marking structure 23 can also be disposed as a character pattern, such as "positive" and "negative". The form of the first polarity-marking structure 23 is not specifically limited in the disclosure.

In the thickness direction Z of the bus bar sheet 500, an orthographic projection of the continuous through-hole 601 covers an orthographic projection of the first polarity-marking structure 23, thereby facilitating users to observe the first polarity-marking structure 23, so as to quickly and accurately identify the polarity of the terminal post 20 as well as other positive and negative components.

In some embodiments, the exposed end face 221 and a hole wall of the continuous through-hole 601 define an accommodating recess 602, and the first polarity-marking structure 23 is disposed at a bottom of the accommodating recess 602. Therefore, by disposing the first polarity-marking structure 23 at the bottom of the accommodating recess 602, wearing and tearing of the first polarity-marking structure 23 is avoided during the assembly or use of the energy-storage module 5, so that the polarity of the terminal post 20 can be identified quickly and accurately. Herein, the first polarity-marking structure 23 is recessed from the exposed end face 221 of the post portion 22 toward the boss portion 21. Alternatively, the first polarity-marking structure 23 protrudes from the exposed end face 221 of the post portion 22 in a direction away from the boss portion 21.

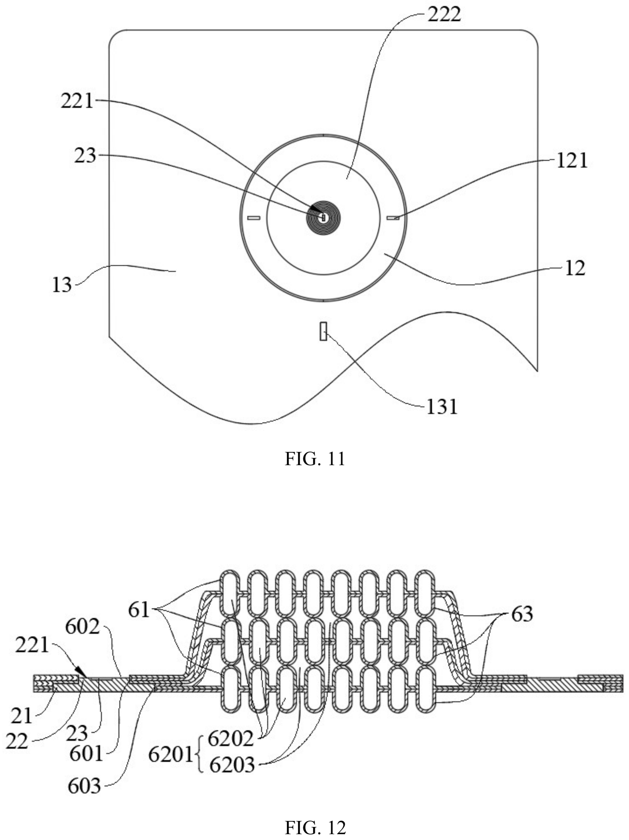

Reference can be made to FIG. 2, FIG. 8, and FIG. 11, where FIG. 11 is a schematic partial structural diagram of an energy-storage apparatus 100 of the energy-storage module 5 illustrated in FIG. 2. The end cover component 10 includes an end cover 11, an upper plastic member 13 disposed at the end cover 11, and an insulating patch 12 disposed at the end cover 11. The insulating patch 12 is located between the upper plastic member 13 and the terminal post 20 and is disposed around a periphery of the terminal post 20. Exemplarily, in this embodiment, the insulating patch 12 is provided with a second polarity-marking structure 121, and the upper plastic member 13 is provided with a third polarity-marking structure 131. This facilitates the assembly of the energy-storage apparatus 100 and the identification of the positive component and the negative component of the energy-storage apparatus 100. In some embodiments, the insulating patch 12 is provided with the second polarity-marking structure 121, while the upper plastic member 13 is not provided with the third polarity-marking structure 131; or, the insulating patch 12 is not provided with the second polarity-marking structure 121, while the upper plastic member 13 is provided with the third polarity-marking structure 131. Materials of the upper plastic member 13 and the insulating patch 12 can be, but are not limited to, plastic with insulating property. The end cover 11 is disposed as a polished aluminum sheet. The second polarity-marking structure 121 and the third polarity-marking structure 131 are arranged offset from each other around a circumference of the terminal post 20, thereby facilitating the users to identify the positive component and the negative component of the energy-storage apparatus 100. For example, a connecting line between the second polarity -marking structure 121 and the first polarity-marking structure 23 as well as a connecting line between the third polarity-marking structure 131 and the first polarity-marking structure 23 cooperatively form a 90° angle.

Optionally, in some embodiments, the second polarity-marking structure 121 and/or the third polarity-marking structure 131 are disposed as a hollow structure. Since the insulating patch 12 is black and the end cover 11 is silver and is prone to reflection, by disposing the second polarity-marking structure 121 and/or the third polarity-marking structure 131 as the hollow structures can facilitate the intuitive identification of the positive component and the negative component of the energy-storage apparatus 100. Optionally, at least one of the first polarity-marking structure 23, the second polarity-marking structure 121, or the third polarity-marking structure 131 is provided with a fluorescent structure, thereby facilitating the machine to identify the positive component and the negative component, and avoiding the users from identification error caused by the reflection of the polished aluminum sheet. A corner of at least one of the second polarity-marking structure 121 or the third polarity-marking structure 131 has an arc shape to prevent the upper plastic member 13 or the insulating patch 12 from warping and peeling off.

In some embodiments, the bus bar sheet 500 includes a welding area 222 welded to the terminal post 20. The second polarity-marking structure 121 is arranged offset from the welding area 222. Therefore, after the bus bar sheet 500 is welded to the terminal post 20, the positive component and the negative component of the energy-storage apparatus 100 can still be identified through the second polarity-marking structure 121.

The terminal post 20 further includes a flange portion 24. The flange portion 24 is connected to a side of the boss portion 21 facing away from a body portion. The end cover 11 is provided with a limiting recess 141 for accommodating the flange portion 24. The end cover component 10 further includes a lower plastic member 14. The end cover 11 is disposed between the upper plastic member 13 and the lower plastic member 14, and the upper plastic member 13 and the lower plastic member 14 are respectively matched with the end cover 11. The limiting recess 141 is recessed from a surface of the lower plastic member 14 facing away from the end cover 11 toward the end cover 11, thereby facilitating the assembly of the terminal post 20 and the end cover component 10. A bottom of the limiting recess 141 is provided with a passing-through-hole. A limiting boss 142 protrudes on a surface of the lower plastic member 14 facing towards the end cover 11. In the thickness direction Z of the bus bar sheet 500, an orthographic projection of the limiting recess 141 onto the surface of the lower plastic member 14 facing away from the end cover 11 falls within an orthographic projection of the limiting boss 142 onto the surface of the lower plastic member 14 facing away from the end cover 11. The end cover 11 is provided with a mounting recess 111 matched with the limiting boss 142, thereby improving assembly efficiency of the end cover 11 and the lower plastic member 14. The energy-storage apparatus 100 further includes an explosion-proof valve 50. The explosion-proof valve 50 is disposed between the end cover 11 and the lower plastic member 14. The explosion-proof valve 50 releases internal pressure of the energy-storage apparatus 100 to improve safety of using the energy-storage apparatus 100.

Reference can be made again to FIG. 4, FIG. 8, and FIG. 9. The bus bar sheet 500 includes a first section 650 and a second section 660. Some bus bar members 60 among the multiple bus bar members 60 form the first section 650, and remaining bus bar members 60 among the multiple bus bar members 60 form the second section 660. Each of the first connecting portion 610 and the second connecting portion 630 of the first section 650 defines a first hole 6501, and each of the first connecting portion 610 and the second connecting portion 630 of the second section 660 defines a second hole 6601 communicating with the first hole 6501. The first section 650 defines the positioning recess 603 at a position where the first hole 6501 is located, and the second section 660 defines the continuous through-hole 601 at a position where the second hole 6601 is located. This facilitates the processing and forming of the bus bar sheet 500, ensures good contact between the bus bar sheet 500 and the boss portion 21 of the terminal post 20, and improves the heat conduction efficiency between the bus bar sheet 500 and the terminal post 20. Exemplarily, in this embodiment, the first hole 6501 is a square hole, and the second hole 6601 is a circular hole. It can be understood that a shape of the first hole 6501 and a shape of the second hole 6601 can be designed according to actual conditions, as long as the shape of the first square hole matches a shape of the boss portion, and the shape of the second through-hole 6203 matches a shape of the column portion 22. For example, both the first hole 6501 and the second hole 6601 can be circular holes, or the first hole 6501 can be an elliptical hole and the second hole 6601 can be a circular hole, etc.

Reference can be made again to FIG. 4 and FIG. 10. In some other embodiments, the terminal post 20 includes an exposed end face 221 protruding from the end cover component 10. The terminal post 20 may include the boss portion 21 or may not include the boss portion 21. The first plate body 6101 and the second plate body 6301 respectively abut against the exposed end face 221, and the exposed end face 221 is provided with the first polarity-marking structure 23. In the thickness direction Z of the bus bar sheet 500, the first plate body 6101 and the second plate body 6301 respectively define a continuous through-hole 601 exposing the first polarity-marking structure 23. The exposed end face 221 and the hole wall of the continuous through-hole 601 form the accommodating recess 602, and the first polarity-marking structure 23 is disposed at the bottom of the accommodating recess 602. Therefore, on the one hand, by abutting the first plate body 6101 and the second plate body 6301 against the exposed end face 221 respectively, the structural design of the bus bar sheet 500 is simplified. On the other hand, by disposing the first polarity-marking structure 23 at the bottom of the accommodating recess 602, wearing and tearing of the first polarity-marking structure 23 is avoided during the assembly or use of the energy-storage module 5, so that the polarity of the terminal post 20 can be identified quickly and accurately.

Reference can be made to FIG. 4, FIG. 5, FIG. 9, and FIG. 12. FIG. 12 is a partial cross-sectional view of the bus bar sheet 500 of the energy-storage module 5 and the energy-storage apparatus 100 illustrated in FIG. 2. The first connecting sheet 61 is implemented as multiple first connecting sheets 61 and the second connecting sheets 63 is implemented as multiple second connecting sheets 63. The multiple first connecting sheets 61 and the multiple second connecting pieces 63 are stacked alternately in the thickness direction Z of the bus bar sheet 500, and the multiple second connecting sheets 63 are disposed at a side of the bus bar sheet 500 facing towards the terminal post 20. The multiple first connecting sheets 61 and the multiple second connecting sheets 63 are provided. On the one hand, the thickness of the bus bar sheet 500 is increased, thereby improving overall structural strength and current-carrying capacity of the bus bar sheet 500. On the other hand, the number of heat dissipation through-holes 6201 in the heat dissipation portion 620 is increased and the heat dissipation area is expanded, thereby improving the heat dissipation performance and mechanical buffering performance of the bus bar sheet 500. Furthermore, since the second connecting sheet 63 is disposed at the side of the bus bar sheet 500 facing towards the terminal post 20, the space occupied by the bus bar sheet 500 in the thickness direction Z is reduced, thereby making the energy-storage module 5 a compact structure and a reduced volume.

In some embodiments, the number of bus bar members 60 in the second section 660 is greater than that in the first section 650, and the number of bus bar members 60 in the first section 650 ranges from 1 to 5. The number of bus bar members 60 in the second section 660 can be, but is not limited to, 2 to 9. The number of bus bar members 60 in the first section 650 can be, but is not limited to, 1, 2, 3, 4, or 5. The number of bus bar members 60 in the second section 660 can be, but is not limited to, 2, 3, 4, 5, 6, 7, 8, or 9, etc. The number of bus bar members 60 in the first section 650 and the number of bus bar members 60 in the second section 660 are merely for illustration, and are not specifically limited in the disclosure. Therefore, while increasing the contact area between the bus bar sheet 500 and the terminal post 20, the overall structural strength of the bus bar sheet 500 is improved to avoid insufficient coverage of the bus bar sheet 500 on an upper surface of the boss portion 21 of the terminal post 20. Over-welding (such as a bus bar at the top deforms due to overheating) during the welding process with the terminal post 20 is avoided, and the welding effect and product yield are improved. The bus bar member 60 is configured as a metal foil. The metal foil can be, but is not limited to, an aluminum foil, a copper foil, etc. The thickness of the metal foil ranges from 0.02 mm to 0.4 mm, and the bus bar member 60 is stacked to enhance the overall structural strength of the bus bar sheet 500 and facilitate bending processing.

Multiple heat dissipation through-holes 6201 include multiple first through-holes 6202 and multiple second through-holes 6203. The first bended recess 613 is defined between two adjacent first bended protrusions 611, and the second bended recess 633 is defined between two adjacent second bended protrusions 631. Adjacent first bended protrusion 611 and second bended protrusion 631 abut against each other in the thickness direction Z of the bus bar sheet 500 to define the first through-hole 6202, and adjacent second bended recess 633 and first bended recess 613 abut against each other in the thickness direction Z of the bus bar sheet 500 to define the second through-hole 6203. Therefore, the number of heat dissipation through-holes 6201 in the heat dissipation portion 620 is increased and the heat dissipation area is expanded, thereby improving the heat dissipation performance and mechanical buffering performance of the bus bar sheet 500.

Exemplarily, in this embodiment, the bus bar sheet 500 includes three bus bar members 60. The first section 650 and the second section 660 each include three bus bar members 60. The first connecting portion 610 and the second connecting portion 630 of the first section 650 are respectively provided with a square hole. The three bus bar members 60 of the first section 650 are stacked and define the positioning recess 603 at a position where the square hole is located. The first connecting portion 610 and the second connecting portion 630 of the second section 660 are respectively provided with a circular hole. The three bus bar members 60 of the second section 660 are stacked and define the continuous through-hole 601 at the circular hole, to expose the first polarity-marking structure 23 provided on the terminal post 20. In the thickness direction Z of the bus bar sheet 500, the end face of the second section 660 facing away from the second section 660 exceeds the exposed end face 221 of the post portion 22. The exposed end face 221 of the post portion 22 and the second section 660 define the accommodating recess 602 at the continuous through-hole 601, and the first polarity-marking structure 23 is disposed at the bottom of the accommodating recess 602. Therefore, by disposing the first polarity-marking structure 23 at the bottom of the accommodating recess 602, the wearing and tearing of the first polarity-marking structure 23 is avoided during the assembly or use of the energy-storage module 5, and the polarity of the terminal post 20 can be identified quickly and accurately.

The embodiments of the disclosure are introduced in detail above, specific examples are used in the disclosure to set forth the principles and embodiments of the disclosure, and the description of the above embodiments is only used to help understand the method of the disclosure and the core idea thereof. Meanwhile, those of ordinary skill in the art may make modifications to the specific implementations and application scopes according to the idea of the disclosure. In conclusion, the content of the description shall not be construed as a limitation to the disclosure.

## Claims

1. An energy-storage module, comprising:
a plurality of energy-storage apparatuses, wherein each of the plurality of energy-storage apparatuses comprises an end cover component and a terminal post passing through the end cover component; and
a bus bar sheet, wherein the bus bar sheet comprises a plurality of bus bar members, the plurality of bus bar members are stacked in a thickness direction of the bus bar sheet, each of the plurality of bus bar members comprises a first connecting portion, a heat dissipation portion, and a second connecting portion that are sequentially connected in a length direction of the bus bar sheet, the first connecting portion and the second connecting portion are respectively connected to terminal posts of two adjacent energy-storage apparatuses, and any adjacent two heat dissipation portions of the plurality of bus bar members cooperatively define a plurality of heat dissipation through-holes.

2. The energy-storage module of claim 1, wherein each of the plurality of bus bar members comprise a first connecting sheet and a second connecting sheet that are stacked, a plurality of first bended protrusions are formed on a side of the heat dissipation portion of the first connecting sheet facing away from the end cover component, a plurality of second bended protrusions are formed on a side of the heat dissipation portion of the second connecting sheet facing towards the end cover component, an extending direction of the plurality of first bended protrusions and an extending direction of the plurality of second bended protrusions are parallel to a width direction of the bus bar sheet, the plurality of first bended protrusions and the plurality of second bended protrusions are disposed opposite to each other in the thickness direction of the bus bar sheet and cooperatively define the plurality of heat dissipation through-holes, and the plurality of heat dissipation through-holes are disposed in the length direction of the bus bar sheet.

3. The energy-storage module of claim 2, wherein the first connecting sheet is implemented as a plurality of first connecting sheets and the second connecting sheet is implemented as a plurality of second connecting sheets, the plurality of first connecting sheets and the plurality of second connecting sheets are stacked alternately in the thickness direction of the bus bar sheet, and the plurality of second connecting sheets are disposed at a side of the bus bar sheet facing towards the terminal post.

4. The energy-storage module of claim 3, wherein the plurality of heat dissipation through-holes comprise a plurality of first through-holes and a plurality of second through-holes, a first bended recess is defined between two adjacent first bended protrusions, a second bended recess is defined between two adjacent second bended protrusions, adjacent first bended protrusion and second bended protrusion abut against each other in the thickness direction of the bus bar sheet to define the first through-hole, and adjacent second bended recess and first bended recess abut against each other in the thickness direction of the bus bar sheet to define the second through-hole.

5. The energy-storage module of any one of claims 1 to 4, wherein a first sheet metal part is disposed at a side of the first connecting portion of each of the plurality of bus bar members in a width direction of the bus bar sheet, and a second sheet metal part is disposed at a side of the second connecting portion of each of the plurality of bus bar members in the width direction of the bus bar sheet; wherein all first sheet metal parts are tightly connected through upsetting to form a first pressed portion, all second sheet metal parts are tightly connected through upsetting to form a second pressed portion, all first connecting portions of the plurality of bus bar members are tightly connected through upsetting to form a first plate body, and all second connecting portions of the plurality of bus bar members are tightly connected through upsetting to form a second plate body; and wherein in the thickness direction of the bus bar sheet, the first pressed portion is bent relative to the first plate body and presses against the first plate body, and the second pressed portion is bent relative to the second plate body and presses against the second plate body.

6. The energy-storage module of claim 5, wherein a first notch is defined at a position of the first connecting portion of each of the plurality of bus bar members that is opposite to the first sheet metal part, a second notch is defined at a position of the second connecting portion of each of the plurality of bus bar members that is opposite to the second sheet metal part, a shape of the first notch matches a shape of the first sheet metal part, and a shape of the second notch matches a shape of the second sheet metal part.

7. The energy-storage module of claim 6, wherein in the width direction of the bus bar sheet, the first notch has a first size, the second notch has a second size, and the first connecting portion has a third size, a ratio of the first size to the third size ranges from 0.2 to 0.45, and a ratio of the second size to the third size ranges from 0.2 to 0.45.

8. The energy-storage module of any one of claims 5 to 7, wherein the first sheet metal part and the second sheet metal part are located on different sides of the energy-storage module in the width direction of the bus bar sheet, and the first sheet metal part and the second sheet metal part are bent towards a same direction.

9. The energy-storage module of any one of claims 5 to 7, wherein in the length direction of the bus bar sheet, a size of the first sheet metal part gradually decreases from a connection end of the first sheet metal part with the first connecting portion to a free end of the first sheet metal part, and a size of the second sheet metal part gradually decreases from a connection end of the second sheet metal part with the second connecting portion to a free end of the second sheet metal part.

10. The energy-storage module of any one of claims 1 to 4, wherein all first connecting portions of the plurality of bus bar members are tightly connected through upsetting to form a first plate body, and all second connecting portions of the plurality of bus bar members are tightly connected through upsetting to form a second plate body.

11. The energy-storage module of claim 10, wherein the terminal post comprises a boss portion and a post portion protruding from the boss portion, the first plate body and the second plate body are respectively provided with a positioning recess, the positioning recess is recessed from a surface of the bus bar sheet facing towards the end cover component in a direction away from the energy-storage apparatus, a continuous through-hole is defined at a bottom wall of the positioning recess, at least part of the boss portion is accommodated in the positioning recess and abuts against the bottom wall of the positioning recess and a side wall of the positioning recess, and the post portion passes through the continuous through-hole.

12. The energy-storage module of claim 11, wherein the bus bar sheet comprises a first section and a second section, some bus bar members among the plurality of bus bar members form the first section, and a remaining bus bar members among the plurality of bus bar members form the second section, each of the first connecting portion and the second connecting portion of the first section defines a first hole, each of the first connecting portion and the second connecting portion of the second section defines a second hole communicating with the first hole, the first section defines the positioning recess at a position where the first hole is located, and the second section defines the continuous through-hole at a position where the second hole is located.

13. The energy-storage module of claim 12, wherein a number of the bus bar members in the second section is greater than that in the first section, and a number of the bus bar members in the first section ranges from 1 to 5.

14. The energy-storage module of any one of claims 11 to 13, wherein a first polarity-marking structure is provided on an exposed end face of the post portion facing away from the boss portion, the continuous through-hole exposes the first polarity-marking structure, the exposed end face and a hole wall of the continuous through-hole define an accommodating recess, and the first polarity-marking structure is disposed at a bottom of the accommodating recess.

15. The energy-storage module of claim 10, wherein the terminal post comprises an exposed end face protruding from the end cover component, the first plate body and the second plate body respectively abut against the exposed end face, the exposed end face is provided with a first polarity-marking structure; in the thickness direction of the bus bar sheet, the first plate body and the second plate body respectively define a continuous through-hole exposing the first polarity-marking structure, the exposed end face and a hole wall of the continuous through-hole form an accommodating recess, and the first polarity-marking structure is disposed at a bottom of the accommodating recess.

16. The energy-storage module of claim 14 or 15, wherein the end cover component comprises an end cover, an upper plastic member disposed at the end cover, and an insulating patch both disposed at the end cover, the insulating patch is located between the upper plastic member and the terminal post, and the insulating patch is disposed around a periphery of the terminal post, the insulating patch is provided with a second polarity-marking structure, and/or the upper plastic member is provided with a third polarity-marking structure.

17. The energy-storage module of claim 16, wherein the second polarity-marking structure and/or the third polarity-marking structure is configured as a hollow structure.

18. An electricity-consumption device, comprising the energy-storage module of any one of claims 1 to 17, wherein the energy-storage module provides electrical energy for the electricity-consumption device.
